(19)

**Europäisches Patentamt**
**European Patent Office**
**Office européen des brevets**

(11)  **EP 1 209 865 B1**

(12)  **EUROPEAN PATENT SPECIFICATION**

(45) Date of publication and mention
of the grant of the patent:
**21.03.2007  Bulletin 2007/12**

(51) Int Cl.:
*H04L 12/56* *(2006.01)*

(21) Application number: **01811100.5**

(22) Date of filing: **16.11.2001**

(54) **Method and structure for variable-length frame support in a shared memory switch**

Verfahren und  Struktur zur Unterstützung von Rahmen variabler Länge in einer Vermittlungsanlage mit gemeisamem Speicher

Procédé et structure pour support de trames de longeur variable dans un commutateur à mémoire partagé

(84) Designated Contracting States:
**AT BE CH CY DE DK ES FI FR GB GR IE IT LI LU MC NL PT SE TR**

(30) Priority:  **24.11.2000  EP  00811122**

(43) Date of publication of application:
**29.05.2002  Bulletin 2002/22**

(73) Proprietor: **International Business Machines Corporation**
**Armonk, NY 10504 (US)**

(72) Inventors:
• **Colmant, Michel**
**8044 Zurich (CH)**
• **Gramsamer, Ferdinand**
**8907 Wettswil (CH)**
• **Minkenberg, Cyriel**
**8134 Adliswil (CH)**

(74) Representative: **Meyer, Michael Josef**
**IBM Research GmbH**
**Zurich Research Laboratory**
**Säumerstrasse 4**
**Postfach**
**8803 Rüschlikon (CH)**

(56) References cited:
**EP-A- 0 748 087**          **US-A- 5 822 540**
**US-A- 6 084 856**

• **LEA C-T ET AL: "A NETWORK THAT INTEGRATES ATM AND IP" IEEE NETWORK, IEEE INC. NEW YORK, US, vol. 13, no. 1, January 1999 (1999-01), pages 48-55, XP000870637 ISSN: 0890-8044**
• **DENZEL W E ET AL: "A flexible shared-buffer switch for ATM at Gb/s rates" COMPUTER NETWORKS AND ISDN SYSTEMS, NORTH HOLLAND PUBLISHING. AMSTERDAM, NL, vol. 27, no. 4, 1995, pages 611-624, XP004037965 ISSN: 0169-7552**
• **MINKENBERG C: "Integrating unicast and multicast traffic scheduling in a combined input- and output-queued packet-switching system" COMPUTER COMMUNICATIONS AND NETWORKS, 2000. PROCEEDINGS. NINTH INTERNATIONAL CONFERENCE ON LAS VEGAS, NV, USA 16-18 OCT. 2000, PISCATAWAY, NJ, USA,IEEE, US, 16 October 2000 (2000-10-16), pages 127-134, XP010524498 ISBN: 0-7803-6494-5**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### *Field of the Invention*

The present invention relates to a method and structure for providing routing capability for variable-length unit traffic in a fixed-length routing switch in electronic networks. Many data transmission protocols and technologies used in such networks, such as TCP/IP and Ethernet, use variable length packets as their transmission units. However, the nodes that make up these networks typically contain high-speed cell switches that only support fixed-size data units. It would be desirable to support variable length data units in such a fixed-size cell switch by offering non-interleaving switching and transmission of such data units. This would remove the need for packet reassembly and lead to better average delay characteristics.

Additionally, many such networks use so-called multicast, i.e. the duplication of one incoming data unit to multiple outputs, and Quality-of-Service (QoS) provisioning, i.e. service differentiation among classes of traffic, as important functions. Consequently, multicast and QoS support must today be offered by any switching fabric.

### *Introduction and Prior Art*

A common implementation of high-speed cell switches, e.g. as described by W.E. Denzel, A.P.J. Engbersen, and I. Iliadis in "A Flexible Shared-Buffer Switch for ATM at Gb/s Rates", published in *Computer Networks and ISDN Systems,* Vol. 27, No. 4, Jan. 1995, pp. 611-624, adopts an output-queued, shared-memory approach. Integrating the functions of multicast, QoS support, and variable-length data units in such an architecture entails a number of possible deadlock scenarios, which must be addressed in order to prevent switch operation from being stalled indefinitely.

The method described presently builds on top of fixed-length cell switches and is completely orthogonal to any other feature in such a switch. That is, it does not harm the performance in terms of latency or throughput, if used as conventional cell based switch. It is also orthogonal to the both the multicast functionality and the QoS functionality, e.g. traffic priorities, that is addressed in such switches.

An existing architecture describe C.B. Stunkel et al in "Implementing Multidestination Worms in Switch-based Parallel Systems: Architectural Alternatives and their Impact", *Proceedings of the 24th ACM Annual International Symposium on Computer Architecture (ISCA '97),* June 1997, Denver, CO, USA. They disclose several ways to implement what they call "multidestination worms", which are somewhat similar to multicast frames discussed here. Their preferred solution is a hybrid central buffer/crossbar solution, although the crossbar is really only used to route unicast traffic with low latency. To avoid deadlocks, Stunkel et al take the approach to assure in advance that a frame can be stored in its entirety in the shared buffer. The head-of-frame is not admitted into the switch before this condition is met. This does not imply that, at the time of admittance, there is sufficient space to fit the entire frame, but eventually, through frames exiting the switch, there will be enough space freed to store the entire frame.

A drawback of this approach is that the shared buffer must be at least as large as the largest frame to be switched, which is a rather undesirable and hardly foreseeable restriction.

Lea C-T et al. "A/I Net: A Network that Integrates ATM and IP" IEEE Network, New York, January 1999, viol. 13, no.1, pages 48-55 describes research aiming to integrate ATM and IP to eliminate the deficiencies of a standalone ATM or IP network, through use of a switch architecture having non-interleaving transmission of IP packets.

US Patent no. 5822540 discloses a method and apparatus for discarding frames in a communications device. A plurality of cells are received representing a plurality of frames wherein each cell comprises a data portion and a header portion including a cell loss priority indicator. At least some of the cells are stored in a buffer. It is determined if the number of cells in the buffer exceeds a first threshold when a first cell including an end of file marker is received. A series of cells received between the first cell and a second cell are discarded if the first threshold was exceeded in the determining step if the cell loss priority indicator for a cell in the series of cells is set to a first state. The second cell comprises a cell including an end of file marker.

To achieve the above objectives, i.e. to reduce the delay and avoid the need for reassembling variable length packets in a switch with fixed-length cells, the present invention essentially aims at

- offering a deadlock-free support for a variable-length packet mode (*frame mode* hereinafter),
- extending this frame mode with multicast support in a deadlock-free fashion, and
- enhancing this frame mode with multiple priorities, such that frames of higher priority destined to the same output may preempt the current frame, but not if they are of the same or lower priority.

Thus, the present invention uses resources more efficiently because the shared buffer or shared memory does not have to be as large to store an entire frame as the above described approach by Stunkel et al.

In other words, the present invention enhances fixed-length cell switches to support also variable-length packets, a packet being composed of a plurality of cells, such that the switch can be used as a conventional fixed-length cell switch without any disadvantages. Thus, the present invention enables a conventional fixed-length cell switch to be used in ATM networks as well as multiprocessor message passing environments, such as SP2 type of environments, that are typically used for parallel computation. To summarize, the great benefit of the present invention is that it unifies different switch designs tailored for different type of networks into one single architecture.

*The Invention*

For the above objectives, the invention provides a solution by providing a novel approach as well as suggested embodiments, i.e. a practical hardware implementation, which - at a modest cost in terms of additional hardware - combines the concepts of both multicast and frame mode in an elegant manner and preferably in a single-chip switch fabric, based on an output-queued, shared memory architecture, while sacrificing none of the performance advantages of such an architecture.

The major advantages of the approach according to the invention are the seamless integration, from a switching point of view, of unicast and multicast frames, and the cost-efficient merging of three highly desirable features into one switching fabric.

Whereas the traditional cell switch's application range was usually quite limited, the addition and integration of both frame mode and multicast functionality enables this type of switch fabric to find applications in a wide range of products:

- the traditional ATM world,
- the router world (native support for variable length TCP/IP packets),
- the Ethernet world (native support for variable length Ethernet frames),
- the (mainframe) server world (as a high-speed interconnect to cluster servers together, instead of the traditional mesh), and/or
- the parallel processing world (as a replacement for the traditional bus structure to interconnect processors and memory).

In the description below, the following expression notation will be used:

OP *(i : range(i) : expr(i));*

where OP can be any binary operator, *i* is a dummy variable, *range(i)* expresses a range (and/or condition) for variable *i,* and *expr(i)* can be any expression, usually also a function of *i*. This notation is shorthand for

$expr(i_0)$ op $expr(i_1)$ op .............. $expr(i_{n-1})$ op $expr(i_n)$

where $i_0$ through $i_n$ are the values of *i* that satisfy the *range(i)* condition.

*The System*

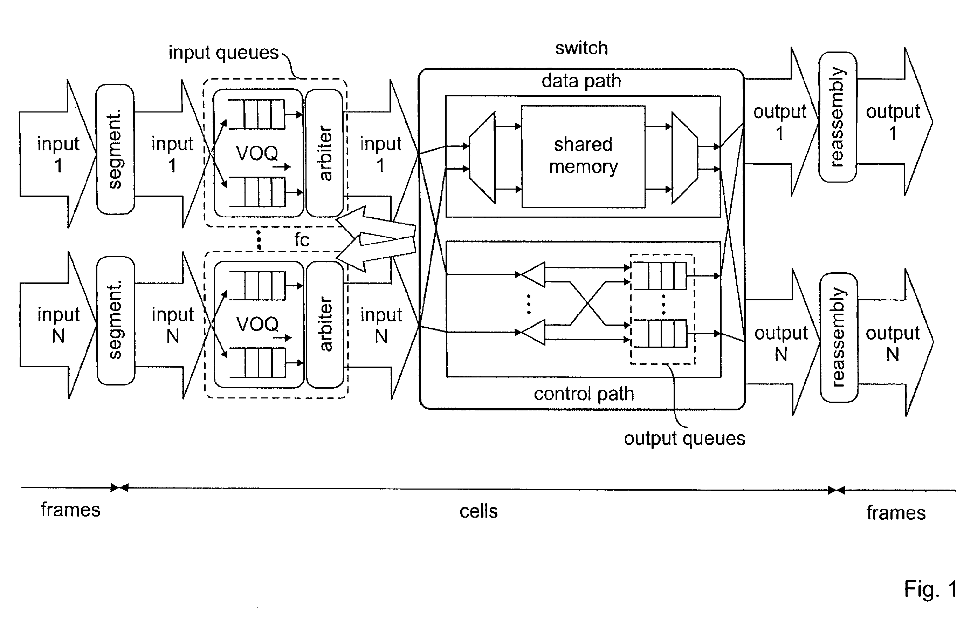

Fig. 1 displays the system level architecture. We assume a system dimension of *N* inputs *x N* outputs, i.e. *NxN,* although the invention is not limited to systems with equals numbers of inputs and outputs. At the input side, variable-length data units arrive and are segmented into fixed-length cells by the segmentation units. These cells are forwarded to the input queues, where they are stored according to their destination. This is often called "virtual output queuing", VOQ. The input queue arbiter makes a decision on which start-of-frame cell to forward, taking into account OQ grant and memory grant information. This system is described by C. Minkenberg, A.P.J. Engbersen, and M. Colmant in "A Robust Switch Architecture for Bursty Traffic", published in *Proc. Int. Zurich Seminar on Broadband Communication IZS 2000,* Zurich, Switzerland, 15-17 Feb. 2000, pp. 207-214.

Strict first-in-first-out, FIFO order of cells destined to the same output and of the same priority must be maintained in order to guarantee frame integrity. Although not mandatory for correct system operation, it is recommended that frames are transmitted from the input queue without interleaving of cells from frames to other outputs, that is, once a start-of-frame cell has been selected, the input queue forwards the corresponding continuation and end-of-frame cells in subsequent time slots, again always taking grant information into account. Other start-of-frame cells are only considered for transmission once the current frame has been completed, i.e. just after an end-of-frame cell has been transmitted.

Cells are forwarded to the switch, which routes them to their proper destination(s). The cells emerging at the egress side of the switch are then reassembled into frames by the reassembly units. In case frame mode is enforced, this unit will have no functionality, except perhaps stripping off the switch's internal cell headers. The internal organization of the switch is such that the control section only handles memory addresses, while the data is passed through the shared memory, as described by W.E. Denzel, A.P.J. Engbersen and I. Iliadis in "A Flexible Shared-Buffer Switch for ATM at Gb/s Rates", published in *Computer Networks and ISDN Systems,* Vol. 27, No. 4, Jan. 1995, pp. 611-624.

The shared memory configuration is known to be well suited for implementation of multicast transmission - the data is stored only once, while the corresponding address is duplicated to all destination queues. A counter associated with the memory address, initially set to the number of copies to be transmitted, is decremented for every copy that leaves the switch, and the address is only released when the counter reaches zero, i.e. the last copy has left the switch.

The switch employs a flow control mechanism consisting of two signals:

- a *shared memory grant* $G_{i;SM}$, based on memory occupancy $O_{SM}$. When the memory fill exceeds a programmable threshold $T_{SM}$, the shared memory grant is removed. The input queues are not allowed to send any more cells as soon as they detect this condition. Note that, for now, the shared memory grant is not actually a function of the input *i*.

$$G_{i;SM} := O_{SM} < T_{SM}, \text{ where } 0 \le i < N. \qquad (1)$$

- a *per-destination grant* $G_i(j)$, based on output queue occupancy $O_Q(j)$. This is a vector of size *N*, of which bit *j* corresponds to the status of output queue *j*. When the output queue fill exceeds a programmable threshold $T_Q(j)$, the corresponding output-queue grant is removed by resetting the corresponding bit in the per-destination grant vector. When the input queues detect this condition, they will not send any more cells destined to this output.

$$G_i(j) := O_Q < T_Q(j), \text{ where } 0 \le i, j < N. \qquad (2)$$

Note that the terms "per-destination grant" and "output-queue grant" are used interchangeably.

Additionally, the output queues are assumed to be of such size that one can fit all memory addresses. Cells are always accepted as long as there are shared memory addresses available, regardless of output queue status. The unavailability of a shared memory address is flagged as a fatal error condition, since this would imply the loss of a cell.

*The Frame Mode*

A frame is defined to be a variable length data unit, equivalent in size to a multiple of the fixed cell size of the switch. In order to transmit a frame, it is segmented into smaller, fixed-length cells, which are subsequently routed through the switch. Thereby, the first cell of a frame is termed the *start-of-frame* cell, any subsequent cells before the last one *continuation* cells, and the last one *end-of-frame* cell. If no additional precautions are taken, cells from different frames (arriving from different inputs) may be interleaved on one output, so that frame reassembly is required. Therefore, it is desirable to transmit frames in a non-interleaved fashion, which leads to better average frame delay characteristics. This mode of operation is henceforth referred to as *frame mode.*

Unfortunately, introducing the frame mode leads to a number of possible deadlock conditions, namely:

- output queue deadlock and shared memory deadlock due to unicast traffic,
- shared memory deadlock due to multicast traffic, and
- shared memory deadlock due to multiple traffic priorities.

In general, these deadlocks occur because an output is waiting for a continuation cell of the frame it is currently transmitting, but this cell cannot enter the switch due to an output queue full or a shared memory full condition.

*Detailed Description of the Function and of an Embodiment*

In the following more detailed description, the function of the invention will be described first. Subsequently, a hardware implementation will be disclosed. This description is supported and completed by the appended drawings which illustrate several examples, namely in:

Fig. 1        the system level architecture, already discussed above;
Figs. 2a - 2c  the frame mode deadlock;
Fig. 3        an active concept unusable for multicast,
Fig. 4        a cyclic waiting multicast frame deadlock with two frames;
Fig. 5        a cyclic waiting multicast frame deadlock with three frames;
Fig. 6        an implementation for a logical output queue;

Fig. 7     a format for an output queue entry,

Fig. 8     a comparison of output queue size vs. implementation, and

Fig. 9     a shared memory with split control and data paths.

*Unicast Deadlock Prevention*

First, it will be explained how to prevent deadlock conditions from occuring when only unicast traffic (traffic with only a single destination) is considered.

The *output-queue-full* deadlock condition occurs when the output queue threshold is crossed while there are no more continuation cells of the current frame in the queue. Since the queue is marked full, they will also not be allowed to enter the switch, hence deadlock occurs.

The *shared memory* deadlock is similar. When the shared memory threshold is crossed (the memory is "full"), all inputs are blocked from sending any more cells, possibly preventing the required continuation cells from entering the switch, which in turn prevents the switch from freeing up the memory addresses needed in the first place.

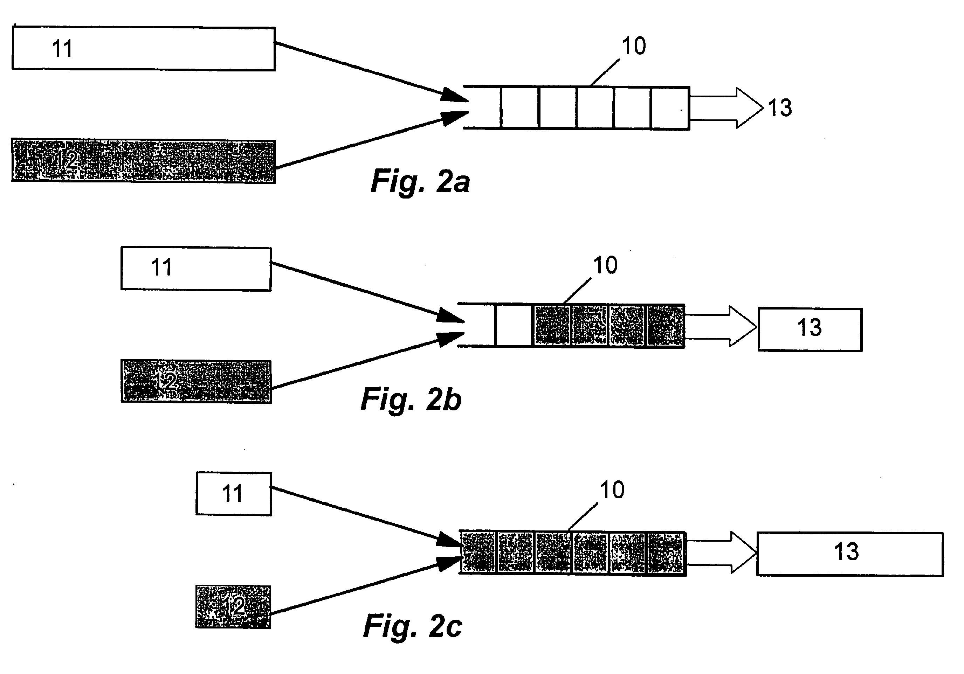

Figs. 2a to 2c illustrate the deadlock. Two very long frames, a first frame 11 and a second frame 12 have the same destination, of which frame 11 is being transmitted. Before frame 11 finishes its output 13, the output queue 10 (or the shared memory) fills up with cells for frame 12, until the *queue full* threshold (or the shared memory threshold) is crossed, preventing further cells from entering the switch.

To circumvent these deadlock conditions, the novel concept of *active inputs* was developed: *Definition 1* (Active Concept): An input *i* is defmed as being active with respect to output *j* when on output *j* a frame that arrived on input *i* is being transmitted. The active states are represented by the boolean vectors $A_i(\cdot)$. An input is said to be active, represented by $A_i^*$, when it is active with respect to at least one output:

$$A_i^* := \exists(j : 0 \leq j < N : A_i(j) \equiv true) \qquad (3)$$

"Being transmitted" in this sense means that thestart-of-frame cell of said frame has been transmitted, while the end-of-frame cell has not yet been. A frame being transmitted is also called an *active frame* and the output it is being transmitted on is an *active output.*

Additionally, an *almost full* condition is defined for the shared memory. A programmable almost full threshold $T_{AF}$ is compared to the current memory occupancy $O_{SM}$. Assuming a flow control delay equivalent to *D* cell slots between switch and adapter, this threshold should be programmed smaller or equal to the memory full threshold minus *D* times the number of ports *N*:

$$T_{AF} \leq T_{SM} - D * N. \qquad (3a)$$

When the shared memory occupancy is above this threshold, the shared memory is said to be *almost full.* This threshold is programmed to some value below the actual memory full threshold, satisfying equation (3a).

Now, compared to the conventional flow control of equations (1) and (2), the outgoing flow control to the adapters is modified as follows for the shared memory grant

$$G_{i,SM}^* := (\neg(O_{SM} \geq T_{AF}) \vee A_i^*) \wedge \neg(O_{SM} \geq T_{SM}), \qquad (4)$$

while the output queue grants are now determined by

$$G_i(j) := \neg(O_Q(j) \geq T_Q(j)) \vee A_i(j), \text{with} \quad 0 \leq i \leq N \text{ and } 0 \leq j \leq N. \qquad (5)$$

Note that this equation does not impose a maximum queue size limit for active inputs. Therefore, the output queue size is assumed to beat least as large as the shared memory.

The above equations (4) and (5) can be read as follows:

- An input *i* receives shared memory grant if and only if ((the shared memory is not almost full) OR (input *i* is marked active)) AND (the shared memory is not full).
- An input *i* receives output grant for output *j* if and only if (output queue *j* has not exceeded its threshold) OR (input *i* is marked active for output *j*).

Note that the switch resorts to a crossbar-like mode of operation when the almost-full threshold is exceeded, because then only one input is allowed to send to an active output, i.e. there is a one-to-one matching between (active) inputs and outputs, just like in a crossbar. Note also that both shared memory grant as well as per-destination grant are determined on a per-input basis now.

This scheme solves the output queue deadlock because it ensures that the output queue grant for the input that may still have to send the rest of the frame is positive as long as the frame has not been completed, thus allowing it to bypass the output queue full condition. Note that only this input gets a positive grant for this output. The active status for an input must be marked on a per output basis because an input can actually be active for multiple outputs at the same time. If the input queue does not interleave frames to different outputs, it is guaranteed that only one of these frames is not entirely in the switch yet.

Furthermore, this scheme also solves the shared memory deadlock. Recall that this deadlock occurs because the inputs that have the required continuation cells cannot send because the switch is full, and the switch cannot free up memory addresses because it needs those continuation cells. What is achieved by the active scheme is that when the switch is almost full, i.e. close to the full threshold, but there are still some addresses available, those addresses for sure go to the inputs that need them.

Another way of looking at it is that, when almost full, it is guaranteed that at least as many cells exit the switch as enter, ensuring that the memory occupancy does not grow further, preventing the memory from reaching the full threshold. That the previous statement holds true can easily be seen when realizing that there are never more active inputs than there are frames being transmitted (no output can be busy transmitting frames from more than one input), and hence, in each cycle at least as many cells leave the switch on the active outputs, as enter on the active inputs.

*Multicast Deadlock Prevention*

The above approach solves the deadlock problem for the unicast case, in multicast traffic however, another deadlock scenario presents itself. The essence of this new problem is that cell transmission and address recycling are no longer directly coupled, because a cell being transmitted, i.e. leaving the switch, will only free up a memory address when it is the last copy of that cell. In unicast, this always holds true, because there is only one copy to be transmitted, but for multicast cells, the active concept described above is no solution.

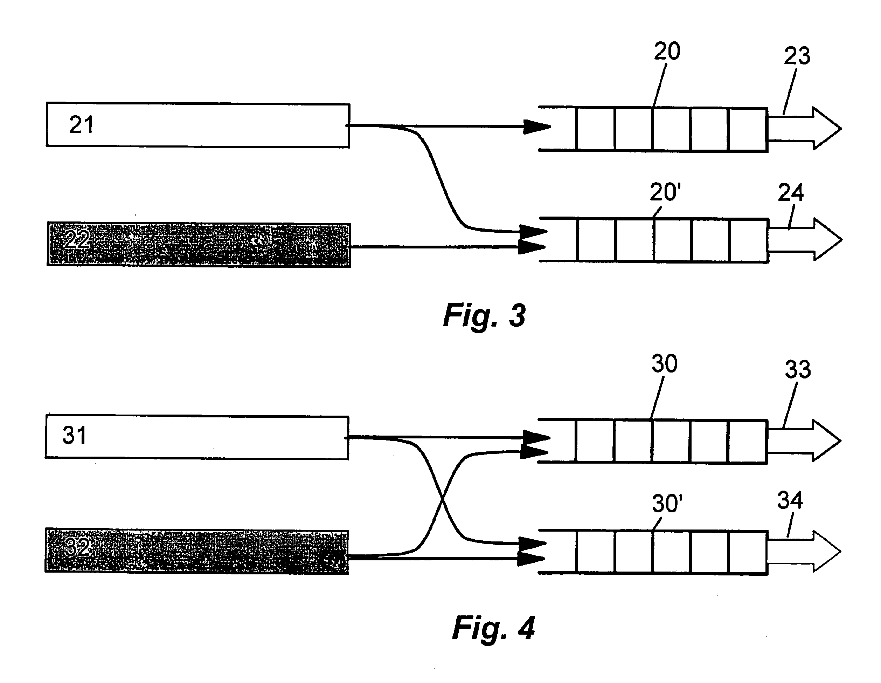

Consider Fig. 3, where two very long frames, a multicast frame 21 and a unicast frame 22 go through the switch, resulting in outputs 23 and 24. Multicast frame 21 is destined for both outputs 23 and 24, unicast frame 22 only for output 24.

Frame 21 is being transmitted on output 23, frame 22 on output 24. According to the active concept, both inputs 21 and 22 are active, allowing continuation cells from both frames to enter the switch. However, because the cells from multicast frame 21 still need to be transmitted on output 24 as well, their memory addresses are not freed. This causes at least one of the memories 20 or 20' to fill up with cells for frame 21 until the memory full threshold is crossed, causing the switch to enter a deadlocked state.

This problem can be solved by introducing the *extended active concept,* which replaces the active concept of Definition 1.

*Definition 2* (Extended Active Concept): An input *i* is defined as being active with respect to output *j* when on this output *j* a frame that arrived on input *i* is being transmitted and it is the last copy of the frame. The active states are represented by the boolean vectors $A_i(j)$. An input is said to be active, represented by $A_i^*$, when it is active with respect to at least one output:

$$A_i^* := \exists(j : 0 \leq j < N : A_i(j) \equiv true) \qquad (6, \text{ identical to } 3)$$

The rules for determining the shared memory and output queue grants remain unchanged. Note the addition of the qualification that an input is only marked active if the last copy of the frame is being transmitted. This guarantees that the addresses are really being freed as the cells leave the switch, so that cell transmission and address recycling are once again coupled for active inputs. Also note that this extended definition of the active concept still holds for unicast traffic.

*Cyclic Waiting Deadlock*

Unfortunately, the shared memory deadlock is not the only added complication. In order to maintain good switch throughput also under heavy multicast traffic, one must be able to transmit multiple multicast frames in parallel. Since every multicast frame's set of destinations can be any subset of all destinations, this leads to output conflicts. The shared memory, output-queued architecture of the novel switch allows to partially transmit frames, so that not all outputs need to be available before transmission, leading to higher throughput. However, this ability leads to possible deadlock conditions, as shall now be demonstrated.

Fig. 4 illustrates the following case. Frame 31 from the first input has destinations on output 33 and 34. Frame 32 from the second input also has destinations on these two outputs. Both frames are very long. Frame 31 is active on output 33, frame 32 on output 34. Assumed is that these are the only two frames currently in the switch. Thus, according to Definition 2, neither frame is currently active, the memories 30 and 30' will fill up, and both will be blocked when the *almost full* threshold is crossed. At that point, frames 31 and 32 will be mutually waiting for the other's completion, which will never happen because neither is active, disallowing the required continuation cells from entering the switch. Hence, there is a deadlock which is fundamentally different from the shared memory deadlock and which cannot be prevented by the above described extended active concept alone.

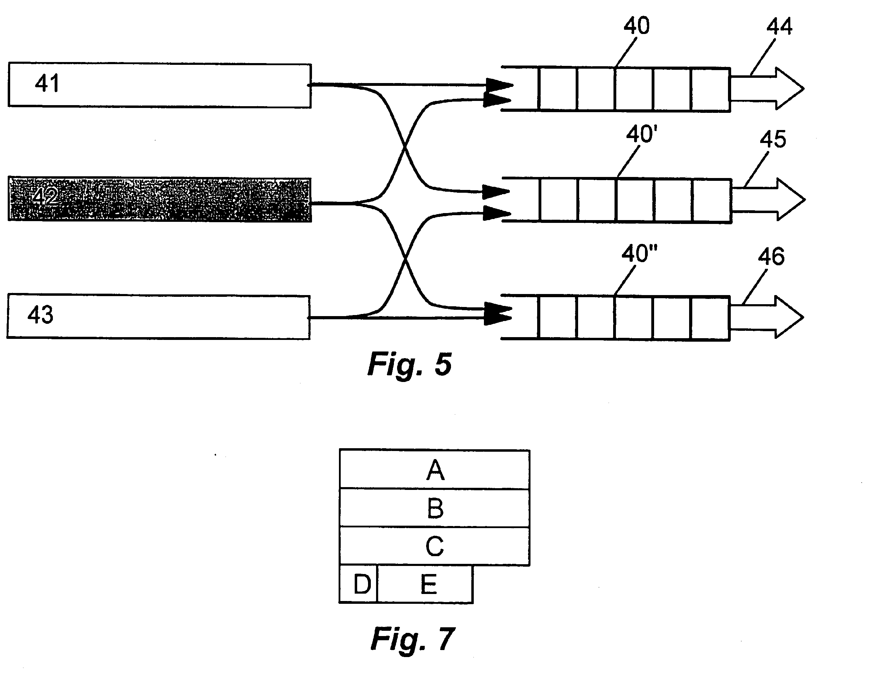

Note that it is not required that frames have at least two destinations in common for the deadlock to occur. Consider a three-frame scenario as depicted in Fig. 5 where frame 41 is destined for outputs 44 and 45, frame 42 goes to 44 and 46, and frame 43 to 45 and 46. Any two frames always have only one destination in common, but when frame 41 is active on output 44, 42 on 46, and 43 on 45, then 42 will be waiting for 41 to end, 41 for 43 to end and 43 for 42 to end, closing the vicious circle. The decision of which frame to send is governed by an arbiter on each output independently. The problem is that these independent decisions may cause cyclic waiting dependencies that cannot be broken once they exist. Therefore, one must prevent these cyclic waiting dependencies from occuring.

This cyclic dependency can be prevented by imposing a strict ordering rule on the way frames are stored in the output queues. This strict ordering relationship is satisfied if and only if

    a) frames waiting in the same output queue are served in first-in-first-out (FIFO) order according to their arrival times, and

    b) multicast frames that arrive simultaneously at different outputs are stored in the same relative order in all corresponding output queues.

This guarantees that a unique earliest frame always exists on every output, which does not have to wait for any other frame on any of its destinations. Therefore, cyclic waiting cannot occur and hence the deadlock condition is solved.

*Frame Mode and Priorities*

Adding QoS support by means of priorities (preemptive, weighted, or otherwise) introduces another dimension to the deadlock problem. We assume $P$ to be the total number of traffic priorities supported by the switch. Every frame has an individual priority $p$. The ordering relations imposed on frames only apply to frames of the same priority. Frames of different priorities are allowed to be served in any order, decided by some given transmission arbitration scheme. One possibility is to always give precedence to frames of higher priority, so-called strict, or preemptive priorities. Cells of frames of different priorities may even be interleaved at both inputs and outputs.

Complications arise because frames with different priorities are allowed to be interleaved on an output. It can therefore happen that an output is flagged active on more than one input, but for different priorities. If no additional measures are taken, it can happen that, while in almost full state, cells from multiple frames are allowed to enter the output queue, whereas only one can exit. Thus, the active concept is broken.

Adding priorities implies that the input status flags have to be kept on a per priority basis, since it can occur that multiple frames are active simultaneously on the same output (one per priority), so the input status arrays from *Definition 2* are now indexed per priority as well: $A_{p,i}(\bullet)$. Similarly, the shared memory grant and output queue grant information are provided on a per priority basis as well.

Switch operation in almost full mode can be restored by only giving grant to the priority for which a cell has left the switch in the current cycle. This is done by keeping track, for every output, from which input and priority a cell was last transmitted.

*Definition 3*: (Output Transmit Status) The output transmit status $B_{p,j}(i)$ is defined to be true when a cell of priority *p* from input *i* has been transmitted on output *j* in the current cycle or no cell has been transmitted at all, and false otherwise.

*Definition 4* extends the extended active concept from *Definition 2* to incorporate priorities.

*Definition 4*: (Transmit Active Concept) An input *i* is defined as being active with respect to *priority p* and output *j* when on output *j* a frame of priority *p* that arrived on input *i* is being transmitted and it is the last copy of the frame. The active states are represented by the boolean vectors $A_{p,i}(j)$. We maintain the notion of "active input", indicated by $A_{p,i}^*$.

$$A_{p,i}^* := \exists (j : 0 \leq j < N : A_{p,i}(j) \equiv true) \tag{7}$$

Additionally, an input is said to be transmit-active for priority p, represented by $A^*_{p,i}$ when it is active with respect to at least one output which is marked active for this priority and input according to *Definition 3*:

$$A_{p,i}^\bullet := \exists (j : 0 \leq j < N : A_{p,i}(j) \equiv true \wedge B_{p,j}(i) \equiv true) \tag{8}$$

The shared memory grant is newly defined by equation (9):

$$G_{p,i,SM} := (\neg(O_{SM} \geq T_{AF}) \vee A_{p,i}^\bullet) \wedge \neg(O_{SM} \geq T_{SM}) \tag{9}$$

with $0 \leq p < P$, $0 \leq i < N$, $0 \leq j < N$.

Finally, we add a shared memory threshold per priority, thus arriving at equation (10):

$$G_{p,i,SM} := (((\neg(O_{p,SM} \geq T_{p,SM}) \vee A_{p,i}^*) \wedge \neg(O_{SM} \geq T_{AF}))$$
$$\vee ((O_{SM} \geq T_{AF}) \wedge A_{p,i}^\bullet)) \wedge \neg(O_{SM} \geq T_{SM}) \tag{10}$$

where $O_{p,SM}$ and $T_{p,SM}$ represent occupancy counters and thresholds per priority, respectively.

Output-queue grant is transmitted on a per priority basis in a cyclic fashion (one priority per cycle) but is otherwise not affected by adding priorities. The cyclic transmission implies that the output queue grant status on the adapter is updated only once every P cycles, increasing the hysteresis.

$$Gp,i(j) := \neg(O_{p,Q}(j) \geq T_{p,Q}(j)) \vee A_{p,i}(j) \tag{11}$$

Equation (11) assumes programmable thresholds per priority as well as queue occupancy counters per priority, although this is not of importance for the functioning of the deadlock prevention.

Equations (10) and (11) nicely demonstrate the four different deadlock prevention mechanisms we have introduced:

- The active flag $A_{p,i}(j)$ in equation (11) prevents output queue deadlock.
- The term $A^*_{p,i}$ in equation (10) prevents shared memory deadlock on the per priority thresholds.
- The same term also prevents shared memory multicast deadlock by means of the extended active concept (only active when last copy is being processed).
- The term $A^*_{p,i,}$ also in equation (10), prevents shared memory deadlock when the shared memory is almost full. It incorporates both shared memory multicast deadlock and shared memory priority deadlock prevention.

*Implementation*

In the following, some practical considerations with regard to implementations and embodiments will be shown and described.

*Shared Memory*

Each shared memory address consists of storage space for one cell, plus an associated multicast counter. Each input controller has an address available in which to store the next arriving cell. When a cell arrives, several things happen:

- the cell data is stored at the available memory address,
- the address is stored in each destination output queue, as indicated by the destination bitmap in the cell's header, and
- the number of destinations is counted and stored in the counter associated with the memory address.

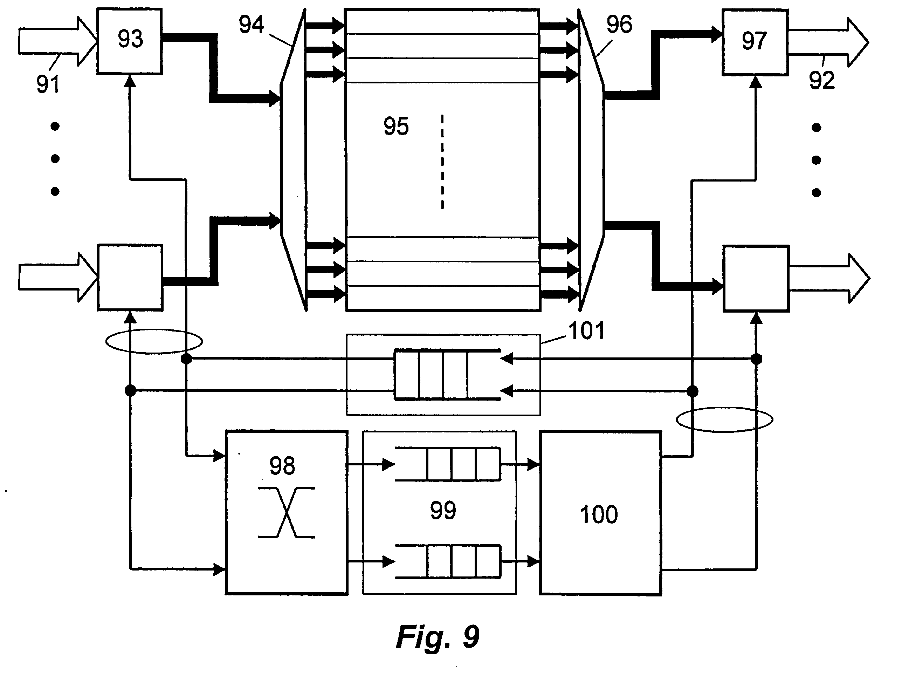

Fig. 9 illustrates a shared memory implementation with split control and data paths. Cells arrive on a plurality of inputs 91 to be routed to a plurality of outputs 92. The input controllers 93 receive free storage addresses from the address manager 101. These input controllers 93 forward the cell data through an input routing structure 94 that routes the data to the correct location in the shared memory 95. The occupancy counter (not shown) corresponding to this shared memory location is initialized to the number of copies of this cell requested to be sent. The shared memory addresses are forwarded to the output queue access manager 98, that routes them one or more of destination output queues 99, as indicated by the destination information in the cell's header. The addresses are enqueued in the output queues 99. The output queue read manager 100 removes one addresses from each output queue 99 per cell slot, and forwards these addresses to the corresponding output controllers 97, which fetch the corresponding cell data from the shared memory 95 at the address received. The data is forwarded from the shared memory 95 through an output routing structure 96 to the output controllers 97. The addresses are returned to address manager 101, which decreases the corresponding occupancy counter (not shown) by 1 for each address returned. Those addresses for which the occupancy counter has reached zero are released to the free queue to be reused.

*Frame Mode*

The frame mode will be a configurable mode. When enabled, each output keeps track of which frame it is currently processing and will not process any other frames until the current one is completed.

Each cell carries a flag indicating whether it is a start-of-frame, continuation, or end-of-frame cell. When a start-of-frame cell of priority $p$, received on input $i$, is transmitted on output $j$ and it is the last copy of the cell (the associated counter equals one), the output is marked active, and the corresponding bit $j$ is set in the active register $A_{p,i}$. When an end-of-frame cell of priority $p$, received on input $i$, is transmitted on output $j$, the corresponding bit $j$ in register $A_{p,i}$ is cleared, if set.

When any cell of priority $p$, received on input $i$, is transmitted on output $j$, the corresponding bit is set in the output transmit status register $B_{p,j}$.

These registers $A_{p,i}$ and $B_{p,j}$, $0 \le i,j < N$, $0 \le p < N$, are used to modify the grant signals as described in equations (10) and (11), for the shared memory and output queue grant, resp.

*Output Queues*

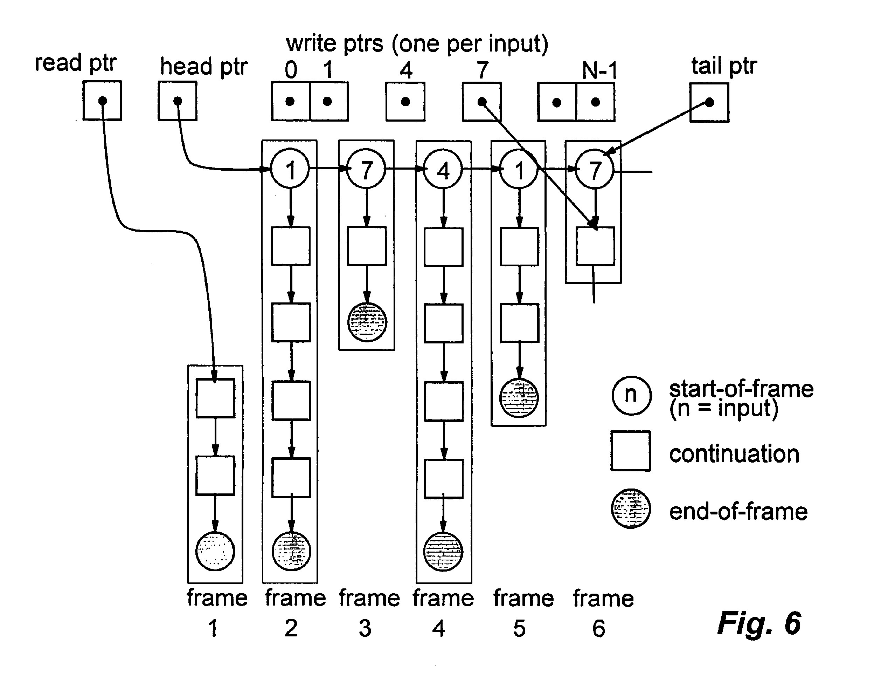

To enable frame mode, the output queues must maintain order information first to determine the order in which the stored frames are transmitted, and second to maintain the order of start-, continuation-, and end-of-frame cells for each frame. This can be achieved by means of a two-dimensional linked list as shown in Fig. 6. In the first, horizontal dimension, all the start-of-frame cells are linked together In the second dimension, the continuation and end-of-frame cells of the respective frames are linked.

*Logical operation*

Every start-of-frame cell, *SoF,* requires two next-cell pointers, one to the start-of-frame cell of the next frame, and one to the first continuation cell of its own frame. Continuation cells only require one next-cell pointer, namely to the next continuation cell. End-of-frame cells, *EoF,* require no next-cell pointer at all. Note that a cell may be *SoF* and *EoF* simultaneously, if the frame consists of just a single cell.

Furthermore, every output queue maintains a number of additional pointers to manage its operation:

- a read pointer, which indicates the next cell to be read from the queue,
- a head pointer, which indicates the first *SoF* cell in the queue,
- a tail pointer, which points to the last *SoF* cell in the queue, in order to be able to immediately append newly arriving frames (start-of-frame cells) at the right position, and
- an array of *N* write pointers, one per input, which point to the last cell of any uncompleted frame from the corresponding input (at any given time, only one frame can be incomplete for any input-output pair). Newly arriving continuation cells are appended at the position indicated by the corresponding write pointer.

All pointers assume the value *nil* if they are currently invalid. In case multiple priorities are to be supported, one set of all of above-mentioned pointers is required for each priority.

We assume there is space for *Q* cells in every output queue *OQ,* and the queue slots are numbered 0 through *Q-1.* We assume that a given queue management scheme provides a queue slot *q* to store an incoming entry. Next, we will describe *OQ* operation in detail.

Initially, the output queue is empty and all pointers are *nil.* When a cell arrives, its memory storage address is passed to the destination output queue, along with the input number the cell arrived on, and the cell type (*SoF, CoF, EoF,* wherein *CoF* identifies a continuation cell). Depending on the type of the cell being written, the following three cases must be distinguished:

- *SoF:* If the *OQ* is empty, the cell is entered in the queue at slot *q,* and the head, tail, and read pointers are all set to *q.* If not, the cell is appended at the tail of the queue as indicated by the tail pointer, i.e., the next *SoF* pointer of the tail pointer's entry is set to *q,* and the tail pointer is also set to *q.* In both cases, the corresponding write pointer is set to *q* also. This write pointer should be *nil;* if it isn't, there is an error -condition, because the previous frame from the same input has not been completed yet. The last *CoF* (or *SoF,* if no *CoF* is present) should be marked as *EoF,* to force an end to the incomplete frame. If the head pointer equals *nil,* it is updated to.
- *CoF:* the cell is entered in the queue at slot *q.* If the corresponding write pointer does not equal *nil,* the cell is linked to the previous cell of its frame by updating the next *CoF* pointer of the entry indicated by this write pointer, setting it to *q,* and the write pointer is also updated to *q.* If the write pointer equals *nil,* there are two possibilities, depending on the input the cell arrived on. If the input equals the one of the frame that's currently active (if there is one), the cell must belong to that same frame, and both the read pointer and the corresponding write pointer are set to *q.* Otherwise, there is an error condition, because apparently no *SoF* or *CoF* from the same input immediately preceded this cell, nor does it belong to the currently active frame; the incoming cell should then be flagged as *SoF,* and treated according to the previous bullet to remedy the situation. Additionally, if the *OQ* is empty, the read pointer is set to *q.* This can only occur if the cell belongs to the frame currently being transmitted, otherwise there is an error condition. If the new cell's input differs from the one of the frame currently being transmitted, or if there is no frame currently being transmitted, an error must have occurred. All cells from this input up to the next *SoF* should be discarded.
- *EoF:* same as *CoF,* with the addition that the corresponding write pointer is set to *nil,* to indicate that the frame has been completed.

OQ read operations are executed as follows. If the read pointer equals *nil,* no cell is read, i.e., the queue is idle. Note that this is not equivalent to the queue being empty: the queue may be stalled due to absent continuation cells of the frame currently being served. If the read pointer is not *nil,* the cell indicated by the read pointer is read. Depending on the type of the cell being read, the following three cases must be distinguished:

- *SoF:* the read pointer is updated to the next *CoF* entry of the cell. If the *next-CoF* value equals nil, then the read pointer will also become nil. This happens when a frame has not been completely received yet by the *OQ.* The tail pointer is set to the cell's next *SoF* entry (may be *nil*). The head pointer is updated to the cell's nextSoF entry (may also be *nil).*

- *CoF:* the read pointer is updated to the next *CoF* entry of the cell.
- *EoF:* the read pointer is updated to the value of the head pointer. If the head pointer now equals *nil,* the tail pointer is also set to *nil.*

In all three cases it must additionally be checked whether the queue entry just read is being pointed to by the write pointer of the corresponding input (the input the cell being read arrived on). If this is the case, both the write pointer in question and the read pointer must be set to *nil.* The *OQ* also keeps track of the input number of frame currently being transmitted.

Fig. 6 shows a logical output queue implementation. Frame 1 is currently being transmitted with the read pointer indicating the next cell to be read, while frame 6 is currently being received from input 7, with the corresponding input pointer indicating the last continuation cell of this frame. Note how the start-of-frame cells are linked together in the horizontal direction, with the head and tail pointers indicating the first and last frame in the queue.

*Physical Implementation*

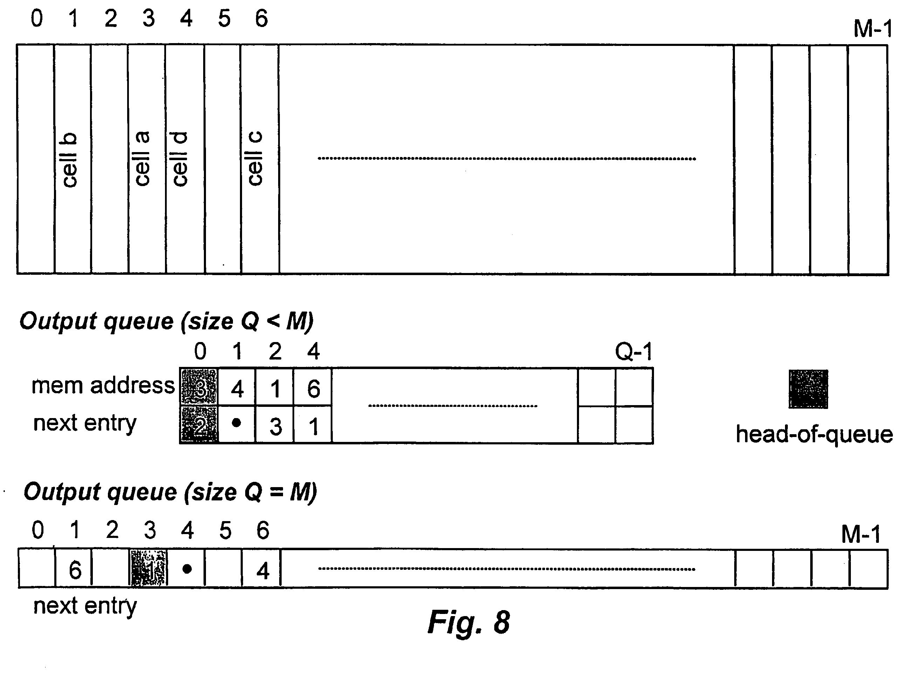

The price paid for supporting frame mode is that every queue entry needs two next-cell pointers, one to point to the next start-of-frame, one to point to the next continuation cell, even though only the start-of-frame cells really need both pointers. Fig. 7 shows the fields that constitute a single entry in an output queue in such a simple implementation. The switch dimension equals *N* ports, and the shared memory size equals *M* cells. Every output queue is of size *Q,* i.e., the queue can store up to *Q* entries.

Fig. 7 shows the fields that constitute a single entry in an output queue, i.e. the output queue entry format. In this figure,

| | |
|---|---|
| A | is the memory address, |
| B | is the next start-of-frame, |
| C | is the next continuation, |
| D | is the cell type identifier, and |
| E | is the input identifier. |

The following table shows the queue entry field sizes

| field | meaning | size (bits) |
|---|---|---|
| A | data memory address | $\log_2 M$ |
| B | next start-of-frame address | $\log_2 Q$ |
| C | next continuation cell address | $\log_2 Q$ |
| D | cell type identifier | 2 |
| E | input identifier | $\log_2 N$ |

The above sizes of the individual queue entry fields amount to a total of $(\log_2 M + 2 + \log_2 Q + \log_2 N + 2)$ bits per entry, for a total of $NQ (\log_2 M + 2 + \log_2 Q + \log_2 N + 2)$. This implementation is alternative 'a'.

Fig. 8 depicts an example for a shared memory in its upper section and below two varitions of an output queue, displaying the output queue size vs. implementation. The central section shows an output queue for $Q < M$, wherein $Q$ is the output queue size and *M* is the *shared memory size,* and the section at the bottom of the page an output queue of size $Q = M.$

The shared memory consists of M packet locations numbered 0 through *M-1* as shown. Below, two *OQ* implementation alternatives are shown. The first *OQ* implementation has queue size *Q* smaller than memory size *M.* The queue slots are numbered 0 through *Q-1.* This implementation requires two fields per queue entry to build the linked list, namely the memory address of the current entry, and the queue slot of the next queue entry. The second implementation below, with queue size $Q = M,$ requires only the next queue slot to build the linked list, as shown.

An improvement can be achieved by sizing the output queues up to the shared memory size, $Q = M.$ This may seem wasteful at first, but there are several advantages, which will be explained with the help of Fig. 8.

First, although the queue has more entries, the individual entries can become smaller, because there is no longer a need to actually store the memory address in the queue by instituting a one-to-one correspondence between the place in the queue and the memory address, which is not possible with a queue that is smaller than the memory. On top of that, a smaller queue will need its own free queue with the associated queue management logic, not shown in Fig. 8. As an example, the figure demonstrates how the sequence of cells {a; b; c; d} is linked up in both implementations. The queue entry size in this implementation equals ($2\log_2 M + \log_2 N + 2$) for a total of $NM(2\log_2 M + \log_2 N + 2)$. This implementation is alternative 'b'.

Further improvements are possible by observing that SoF entries only require a next-SoF pointer, whereas CoF entries only require a next-CoF pointer. Additionally, the input identifier need only be stored with SoF entries. These observations suggest an implementation where queues for SoF and CoF entries are separated. We can make a large saving by realizing that the order of CoF cells of a given frame is identical on all outputs, by the definition of a frame; that is, CoF order does not have to be maintained on a per-output basis. This implies that only one CoF queue (also of size $M$) is needed, along with $N$ SoF queues.

In terms of the previous table this means that the SoF queues store fields B and E, and the CoF queue stores field C. Since the type of cell is already implicit in the queue it is stored in, only a 1-bit cell type identifier to flag EoF cells is required (for entries in all queues).

The resulting implementation requires $NM (\log_2 M + \log_2 N + 1)$, bits for the SoF queues plus $M(\log_2 M + 1)$ bits for the CoF queue, for a total of $(N + 1)M(\log_2 M + 1) + NM \log_2 N$ bits. This is the final implementation alternative 'c'.

The following table compares the implementation complexities of the three proposed alternatives, expressed in the total number of bits of storage required.

| Implementation | Complexity (bits of storage) |
|---|---|
| a$(N,Q,M)$ | $NQ(\log_2 M + 2\log_2 Q + \log_2 N + 2)$ |
| b$(N,M)$ | $NM (2\log_2 M + \log_2 N + 2)$ |
| c$(N,M)$ | $(N+1) M(\log_2 M + 1) + NM \log_2 N$ |

To avoid cyclic waiting deadlock conditions, a strict enqueuing order must be satisfied. This can be achieved as follows: The output queues follow a strict FIFO discipline on a per frame basis. Frames that arrive at one output queue simultaneously are ordered according to a predetermined order of their respective input numbers. This can be round robin, or any other suitable ordering scheme. The key point in realizing the strict timing order is to make sure that this order is identical at all outputs. However, the order of inputs must not be identical in subsequent time slots. For reasons of fairness, the order may be suitably rearranged at every time slot.

Thus, the present invention presents a way to integrate support for both frame mode operation and multicast in an output-queue shared memory cell switch. It has been shown how deadlock situation in both unicast and multicast frame mode can be avoided, also an overview of how to implement these schemes has been given.

**Claims**

1. A method for providing routing capability for variable-length unit traffic in a fixed-length cell routing switch with a shared memory,

   an incoming variable-length unit, a frame (10,11), is segmented into a plurality of fixed-length cells including a start-of-frame cell, one or more continuation cell(s), and an end-of-frame cell,

   said fixed-length cells are routed through said switch,

   the method **characterized in that**,

   at an output (13) of said switch, subsequent and deadlock-free transmission of consecutive cells of a certain frame is guaranteed by preventing any cell of a different frame from interleaving, which is governed by

   defining a predetermined shared memory grant for said shared memory, defining a predetermined output queue grant for said certain frame and its cells,

   controlling a cell's entry into said shared memory depending upon said shared memory grant,

   controlling transmission of a said cell of said certain frame depending upon said output queue grant, and

   a flow control mechanism is used comprising the shared memory grant signal, based on memory occupancy, and the output queue grant signal, based on output queue occupancy, wherein the mechanism comprises the steps of removing shared memory grant on the condition that the memory fill exceeds a programmable threshold, wherein the shared memory grant controls a cell's entry into the shared memory by granting entry if and only if there is space available in said shared memory

   AND

   a predetermined "almost full" condition, indicating that a limited memory space is available, is not met in said shared memory OR an "active frame" condition is met, indicating that a certain frame's start-of-frame cell has been transmitted, but not its end-of-frame cell, removing output queue grant on the condition that the output queue fill exceeds a programmable threshold, wherein the output queue grant allows a cell's transmission through the switch to a certain output if and only if

the output queue associated to said certain output has not exceeded its predetermined threshold

OR

said cell is marked "active" for said certain output, i.e. belonging to an "active frame" whose start-of-frame cell has been transmitted, but not its end-of-frame cell,

and the input queues are not allowed to send any more cells as soon as they detect either of these conditions.

2. The method according to claim 1, wherein further
   a frame to be transmitted is assigned a multicast vector indicating a plurality of outputs of the switch.

3. The method according to claim 1 or 2, wherein further
   a frame to be transmitted is assigned a priority and,
   at an output of the switch, transmission of cells of a frame with a lower priority is interrupted when a frame with a higher priority is to be transmitted at said same output.

4. The method according to claim 3, wherein
   transmission of cells of the frame with the lower priority is resumed when the frame with the higher priority is fully transmitted.

5. The method according to claim 1, wherein each output
   keeps track which frame is currently "active", i.e. being transmitted, and will not process any other frame until the end-of-frame cell of said current one is transmitted.

6. The method according to any of the preceding claims, wherein each cell is assigned a flag indicating whether it is a start-of-frame or continuation or end-of-frame cell.

7. The method according to claim 1, wherein
   the "almost full" condition for said shared memory is a programmable threshold below a "memory full" threshold, i.e. the total space available in said memory.

8. The method according to claim 7, wherein
   the "almost full" threshold $T_{AF}$ is smaller or equal to the "memory full" threshold $T_{SM}$
   minus $D$ times the number of ports $N$ of the switch,

$$T_{AF} \leq T_{SM} - D \cdot N,$$

   $D$ being the flow control delay in cells in the switch.

9. The method according to any preceding claim, wherein
   the output queue grant controlling a cell's transmission through the switch to a certain output is extended to include multicast deadlock prevention by defining a frame to be "active" if and only if its last copy is being transmitted, so that said output queue grant allows a cell's transmission if and only if
   the output queue associated to said certain output has not exceeded its pretermined threshold
   OR
   said cell is marked "active" for said certain output, i.e. belonging to the last copy of an "active frame" whose start-of-frame cell has been transmitted, but not its end-of-frame cell.

10. The method according to any preceding claim, wherein
    the output queue grant controlling a cell's transmission through the switch to a certain output is extended to include frame priority deadlock prevention by defining a frame to be "active" according if and only if its highest priority is being transmitted, so that said output queue grant allows a cell's transmission if and only if
    the output queue associated to said certain output has not exceeded its pretermined threshold
    OR
    said cell is marked "active" for said certain output, i.e. belonging to the highest priority of an "active frame" whose start-of-frame cell has been transmitted, but not its end-of-frame cell.

11. A fixed-length cell routing switch providing routing capability for variable-length cell traffic with a shared memory and output queues, **characterized in that** each address of said memory includes

storage space for one cell, and
an associated multicast counter,
thus, when a cell arrives, providing means for
storing the cell's data at an available memory address in the shared memory (95), storing said used address in each destination output queue(s) (99) to which the cell is destined, and
counting and storing the number of destinations in said counter,
and wherein the switch has a flow control mechanism comprising two signals:

a shared memory grant signal, based on shared memory occupancy, which signal is removed on the condition that the memory fill exceeds a programmable threshold, wherein the shared memory grant controls a cell's entry into the shared memory by granting entry if and only if there is space available in said shared memory

AND
a predetermined "almost full" condition, indicating that a limited memory space is available, is not met in said shared memory OR an "active frame" condition is met, indicating that a certain frame's start-of-frame cell has been transmitted, but not its end-of-frame cell,
an output queue grant signal, based on output queue occupancy, which signal is removed on the condition that the output queue exceeds a programmable threshold, wherein the output queue grant allows a cell's transmission through the switch to a certain output if and only if
the output queue associated to said certain output has not exceeded its predetermined threshold
OR
said cell is marked "active" for said certain output, i.e. belonging to an "active frame" whose start-of-frame cell has been transmitted, but not its end-of-frame cell,
wherein input queues are not allowed to send any more cells as soon as they detect either of these conditions.

12. The routing switch according to claim 11, further including
a plurality of registers, each associated with a particular input and a particular output of said switch for storing an indication, preferably a bit, indicating that said particular output is "active" with respect to said particular input,
said indication being set when a start-of-frame cell of a specific frame received on
said particular input is transmitted on said particular output and said specific frame being the last copy to be transmitted, and
said indication being reset when the corresponding end-of-frame cell is transmitted at said particular output.

13. The routing switch according to claim 11 or 12, further including
means for assigning a priority to a frame to be transmitted and
means for interrupting and/or resuming transmission of cells of a frame with a lower priority whenever a frame with a higher priority is to be transmitted at the same output.

14. The routing switch according to claim 11, further including
a plurality of registers, each associated with a particular priority, a particular input,
and a particular output of said switch for storing an indication, preferably a bit, indicating that said particular output is "active" with respect to said particular input and said particular priority,
said indication being set when a start-of-frame cell of a specific frame of said particular priority, received on said particular input, is transmitted on said particular output and said specific frame being the last copy to be transmitted, and
said indication being reset when the corresponding end-of-frame cell is transmitted at said particular output.
a plurality of registers, each associated with a particular priority, a particular input,
and a particular output of said switch for storing an indication, preferably a bit, indicating that said particular output is "transmit active" with respect to said particular input and said particular priority,
said indication being set when either a cell of a specific frame of said particular priority, received on said particular input, has been transmitted on said particular output in the current packet cycle, or no cell has been transmitted at all on said particular output, and
said indication being reset otherwise.

**Patentansprüche**

1. Verfahren zur Schaffung einer Routing-Funktion für Datenverkehr von Einheiten variabler Länge in einer Vermittlungsanlage mit gemeinsamem Speicher für Zellen fest vorgegebener Länge,

   bei welchem eine ankommende Einheit variabler Länge, ein Rahmen (10, 11), in eine Vielzahl von Zellen fest vorgegebener Länge, einschließlich einer Anfangszelle, einer oder mehrerer Fortsetzungszelle(n) und einer Endzelle, segmentiert wird,

   wobei die Zellen mit fest vorgegebener Länge durch die Vermittlungsanlage geleitet werden und das Verfahren **dadurch gekennzeichnet ist, dass**

   an einem Ausgang (13) der Vermittlungsanlage die nachfolgende und von gegenseitigen Sperrungen (Deadlocks) freie Übertragung aufeinander folgender Zellen eines bestimmten Rahmens **dadurch** gewährleistet wird, dass eine Verschachtelung mit Zellen eines anderen Rahmens verhindert wird, indem

   - für den gemeinsamen Speicher eine vorgegebene Berechtigung definiert wird,
   - für den bestimmten Rahmen und seine Zellen eine vorgegebene Berechtigung für die Ausgabewarteschlange definiert wird,
   - die Aufnahme des Eintrags einer Zelle in den gemeinsamen Speicher in Abhängigkeit von der Berechtigung für den gemeinsamen Speicher gesteuert wird,
   - die Übertragung der Zelle des bestimmten Rahmens in Abhängigkeit von der Berechtigung für die Ausgabewarteschlange gesteuert wird, und ein Ablaufsteuerungsmechanismus verwendet wird, der das auf der Speicherauslastung basierende Berechtigungssignal für den gemeinsamen Speicher und das auf der Auslastung der Ausgabewarteschlange basierende Berechtigungssignal für die Ausgabewarteschlange umfasst, wobei der Mechanismus die folgenden Schritte umfasst:
   - Aufheben der Berechtigung für den gemeinsamen Speicher unter der Bedingung, dass die Speicherauslastung einen programmierbaren Schwellenwert überschreitet, wobei die Berechtigung für den gemeinsamen Speicher die Aufnahme des Eintrags einer Zelle in den gemeinsamen Speicher in der Weise steuert, dass der Eintrag dann und nur dann aufgenommen wird, wenn im gemeinsamen Speicher freies Speichervolumen verfügbar ist UND

   im gemeinsamen Speicher eine vorgegebene Bedingung "fast voll" nicht erfüllt ist, die ein begrenztes verfügbares Speichervolumen anzeigt, ODER eine Bedingung "aktiver Rahmen" erfüllt ist, welche anzeigt, dass die Anfangszelle eines bestimmten Rahmens, nicht aber seine Endzelle, übertragen worden ist,

   - Aufheben der Berechtigung für die Ausgabewarteschlange unter der Bedingung, dass die Auslastung der Ausgabewarteschlange einen programmierbaren Schwellenwert überschreitet, wobei die Berechtigung für die Ausgabewarteschlange die Übertragung einer Zelle durch die Vermittlungsanlage zu einem bestimmten Ausgang dann und nur dann gestattet, wenn die zu dem bestimmten Ausgang gehörende Ausgabewarteschlange ihren vorgegebenen Schwellenwert nicht überschritten hat

   ODER die Zelle für den bestimmten Ausgang als "aktiv" markiert wurde, d. h. zu einem "aktiven Rahmen" gehört, dessen Anfangszelle, nicht aber dessen Endzelle, übertragen worden ist,

   und die Eingabewarteschlangen nach dem Erkennen des Vorliegens einer dieser Bedingungen keine weiteren Zellen mehr senden dürfen.

2. Verfahren nach Anspruch 1, bei welchem ferner einem zu übertragenden Rahmen ein Multicast-Vektor zugewiesen wird, der eine Vielzahl von Ausgängen der Vermittlungsanlage anzeigt.

3. Verfahren nach Anspruch 1 oder 2, bei welchem ferner einem zu übertragenden Rahmen eine Priorität zugewiesen wird und,

   an einem Ausgang der Vermittlungsanlage die Übertragung von Zellen eines Rahmens mit niedrigerer Priorität unterbrochen wird, wenn ein Rahmen mit höherer Priorität an demselben Ausgang übertragen werden soll.

4. Verfahren nach Anspruch 3, bei welchem die Übertragung von Zellen des Rahmens mit der niedrigeren Priorität wieder aufgenommen wird, wenn der Rahmen mit der höheren Priorität vollständig übertragen worden ist.

5. Verfahren nach Anspruch 1, bei dem jeder Ausgang

   verfolgt, welcher Rahmen gegenwärtig "aktiv" ist, d. h. übertragen wird, und keinen anderen Rahmen überträgt, bis die Endzelle des aktuellen Rahmens übertragen worden ist.

6. Verfahren nach einem der vorangehenden Ansprüche, bei welchem jeder Zelle eine Markierung zugewiesen wird, welche anzeigt, ob es sich um eine Anfangs-, eine Fortsetzungs- oder eine Endzelle handelt.

7. Verfahren nach Anspruch 1, bei welchem die Bedingung "fast voll" für den gemeinsamen Speicher ein programmierbarer Schwellenwert ist, der unterhalb eines Schwellenwertes "Speicher voll", d. h. unterhalb des gesamten verfügbaren Volumens des Speichers liegt.

8. Verfahren nach Anspruch 7, bei welchem der Schwellenwert $T_{AF}$ "fast voll" kleiner als oder gleich dem Schwellenwert $T_{SM}$ "Speicher voll"
minus dem Produkt aus D mal Anzahl der Ports *N* der Vermittlungsanlage ist,

$$T_{AF} \leq T_{SM} - D \cdot N,$$

wobei *D* gleich der Ablaufsteuerungsverzögerung in den Zellen der Vermittlungsanlage ist.

9. Verfahren nach einem der vorangehenden Ansprüche, bei welchem die Berechtigung für die Ausgabewarteschlange, welche die Übertragung einer Zelle durch die Vermittlungsanlage zu einem bestimmten Ausgang steuert, auf die Verhinderung von Multicast-Deadlocks ausgeweitet wird, indem ein Rahmen dann und nur dann als "aktiv" definiert wird, wenn sein letztes Exemplar gerade übertragen wird, sodass die Berechtigung für die Ausgabewarteschlange die Übertragung einer Zelle dann und nur dann gestattet, wenn

- die zu diesem Ausgang gehörende Ausgabewarteschlange ihren vorgegebenen Schwellenwert noch nicht überschritten hat
ODER
- die Zelle für den bestimmten Ausgang als "aktiv" markiert wurde, d. h. zum letzten Exemplar eines "aktiven Rahmens" gehört, dessen Anfangszelle, nicht aber dessen Endzelle, übertragen worden ist.

10. Verfahren nach einem der vorangehenden Ansprüche, bei dem die Berechtigung für die Ausgabewarteschlange, welche die Übertragung einer Zelle durch die Vermittlungsanlage zu einem bestimmten Ausgang steuert, auf die Verhinderung von Rahmenprioritäts-Deadlocks ausgeweitet wird, indem ein Rahmen dann und nur dann als "aktiv" definiert wird, wenn seine höchste Priorität gerade übertragen wird, sodass die Berechtigung für die Ausgabewarteschlange die Übertragung einer Zelle dann und nur dann gestattet, wenn

- die zu diesem Ausgang gehörende Ausgabewarteschlange ihren vorgegebenen Schwellenwert noch nicht überschritten hat
ODER
- die Zelle für den bestimmten Ausgang als "aktiv" markiert wurde, d. h. zur höchsten Priorität eines "aktiven Rahmens" gehört, dessen Anfangszelle, nicht aber dessen Endzelle, übertragen worden ist.

11. Vermittlungsanlage für Zellen fest vorgegebener Länge mit gemeinsamem Speicher und Ausgabewarteschlangen zur Schaffung einer Routing-Funktion für Datenverkehr von Zellen variabler Länge, **dadurch gekennzeichnet, dass** jede Adresse im Speicher

- Speicherplatz für eine Zelle, und
- einen zugehörigen Multicast-Zähler beinhaltet, und somit, wenn eine Zelle ankommt, Mittel
- zum Speichern der Daten der Zelle an einer verfügbaren Speicheradresse im gemeinsamen Speicher (95),
- zum Speichern der verwendeten Adresse in jeder der Ziel-Ausgabewarteschlangen (99), an welche die Zelle adressiert ist, und
- zum Zählen und Speichern der Anzahl der ziele im Zähler bereitstellt,

wobei die Vermittlungsanlage über einen Ablaufsteuerungsmechanismus verfügt, der zwei Signale umfasst:

- ein auf der Auslastung des gemeinsamen Speichers basierendes Berechtigungssignal, das unter der Bedingung aufgehoben wird, dass die Speicherauslastung einen programmierbaren Schwellenwert überschreitet, wobei die Berechtigung für den gemeinsamen Speicher die Aufnahme des Eintrags einer Zelle in den gemeinsamen Speicher in der Weise steuert, dass der Eintrag dann und nur dann aufgenommen wird, wenn im gemeinsamen Speicher freies Speichervolumen verfügbar ist

UND im gemeinsamen Speicher eine vorgegebene Bedingung "fast voll" nicht erfüllt ist, die ein begrenztes verfügbares Speichervolumen anzeigt, ODER eine Bedingung "aktiver Rahmen" erfüllt ist, welche anzeigt, dass die Anfangszelle eines bestimmten Rahmens, nicht aber seine Endzelle, übertragen worden ist,

- ein auf der Auslastung der Ausgabewarteschlange basierendes Berechtigungssignal, das unter der Bedingung aufgehoben wird, dass die Auslastung der Ausgabewarteschlange einen programmierbaren Schwellenwert überschreitet, wobei die Berechtigung für die Ausgabewarteschlange die Übertragung einer Zelle durch die Vermittlungsanlage zu einem bestimmten Ausgang dann und nur dann gestattet, wenn die zu dem bestimmten Ausgang gehörende Ausgabewarteschlange ihren vorgegebenen Schwellenwert nicht überschritten hat ODER

die Zelle für den bestimmten Ausgang als "aktiv" markiert wurde, d. h. zu einem "aktiven Rahmen" gehört, dessen Anfangszelle, nicht aber dessen Endzelle, übertragen worden ist,

wobei die Eingabewarteschlangen nach dem Erkennen des Vorliegens einer dieser Bedingungen keine weiteren Zellen mehr senden dürfen.

12. Vermittlungsanlage nach Anspruch 11, die ferner eine Vielzahl jeweils einem bestimmten Eingang und einem bestimmten Ausgang zugewiesener Register zum Speichern einer Markierung, vorzugsweise eines Bits, beinhaltet, welche anzeigt, dass der bestimmte Ausgang in Bezug auf den bestimmten Eingang "aktiv" ist,

wobei die Markierung gesetzt wird, wenn eine auf dem bestimmten Eingang empfangene Anfangszelle eines bestimmten Rahmens auf dem bestimmten Ausgang übertragen wird und der bestimmte Rahmen das letzte zu übertragende Exemplar ist,

und wobei die Markierung wieder zurückgesetzt wird, wenn die entsprechende Endzelle auf dem bestimmten Ausgang übertragen wird.

13. Vermittlungsanlage nach Anspruch 11 oder 12, welche ferner Folgendes umfasst:

- Mittel zum Zuweisen einer Priorität für einen zu übertragenden Rahmen und
- Mittel zum Unterbrechen und/oder Wiederaufnehmen der Übertragung von Zellen eines Rahmens mit niedrigerer Priorität, wenn ein Rahmen mit höherer Priorität auf demselben Ausgang übertragen werden soll.

14. Vermittlungsanlage nach Anspruch 11, welche ferner Folgendes beinhaltet:

- eine Vielzahl jeweils einer bestimmten Priorität, einem bestimmten Eingang und einem bestimmten Ausgang der Vermittlungsanlage zugewiesener Register zum Speichern einer Markierung, vorzugsweise eines Bits, welche anzeigt, dass der bestimmte Ausgang in Bezug auf den bestimmten Eingang und die bestimmte Priorität "aktiv" ist,

wobei die Markierung gesetzt wird, wenn eine auf dem bestimmten Eingang empfangene Anfangszelle eines bestimmten Rahmens der bestimmten Priorität auf dem bestimmten Ausgang übertragen wird und der bestimmte Rahmen das letzte zu übertragende Exemplar ist, und wobei die Markierung wieder zurückgesetzt wird, wenn die entsprechende Endzelle auf dem bestimmten Ausgang übertragen wird,

- eine Vielzahl jeweils einer bestimmten Priorität, einem bestimmten Eingang und einem bestimmten Ausgang der Vermittlungsanlage zugewiesener Register zum Speichern einer Markierung, vorzugsweise eines Bits, welche anzeigt, dass der bestimmte Ausgang in Bezug auf den bestimmten Eingang und die bestimmte Priorität "sendeaktiv" ist,

wobei die Markierung gesetzt wird, wenn entweder eine auf dem bestimmten Eingang empfangene Zelle eines bestimmten Rahmens mit der bestimmten Priorität während des aktuellen Paketzyklus auf dem bestimmten Ausgang übertragen worden ist oder wenn auf dem bestimmten Ausgang überhaupt keine Zelle übertragen worden ist, und wobei die Markierung wieder zurückgesetzt wird, wenn dies nicht der Fall ist.

**Revendications**

1. Un procédé pour fournir une capacité d'acheminement pour un trafic d'unités à longueur variable dans un commutateur d'acheminement à cellules à longueur fixe, avec une mémoire partagée,

une unité à longueur variable entrante, une trame (10, 11), est segmentée en une pluralité de cellules à longueur fixe, incluant une cellule de début-de-trame, une ou plusieurs cellule(s) de continuation et une cellule de fin-de-trame, lesdites cellules à longueur fixe sont acheminées par ledit commutateur,

ledit procédé étant **caractérisé en ce que**,

à une sortie (13) dudit commutateur, une transmission, subséquente et exempte d'arrêt fatal, de cellules consécutives d'une certaine trame est assuré, par empêchement d'une cellule quelconque d'une trame différente de s'entrelacer, ce qui est gouverné par :

la définition d'une garantie de mémoire partagée prédéterminée pour ladite mémoire partagée,

la définition d'une garantie de file d'attente de sortie prédéterminée pour ladite certaine trame et ses cellules, la commande d'une entrée de cellule dans ladite mémoire partagée, selon ledit accord de mémoire partagée, la commande de la transmission de ladite cellule de de ladite certaine trame selon ledit accord de file d'attente de sortie et

un mécanisme de commande de débit est utilisé, comprenant le signal d'accord de mémoire partagé, d'après l'occupation de la mémoire, et le signal d'accord de file d'attente de sortie, d'après l'occupation de la file d'attente de sortie, dans lequel le mécanisme comprend les étapes consistant à :

supprimer l'accord de mémoire partagée à la condition selon laquelle le remplissage de la mémoire dépasse un seuil programmable, dans lequel l'accord de mémoire partagé commande une entrée de cellule dans la mémoire partagée en garantissant l'entrée si, et seulement si,

un espace est disponible dans ladite mémoire partagée

ET

une condition "presque plein" prédéterminée, indiquant le fait qu'un espace mémoire limité est disponible, n'est pas satisfaite dans ladite mémoire partagée OU une condition "trame active" est satisfaite, indiquant qu'une certaine cellule de début-de-trame, d'une trame, a été transmise, mais pas sa cellule de fin-de-trame,

supprimer l'accord file d'attente de sortie à la condition selon laquelle le remplissage de la file d'attente de sortie dépasse un seuil programmable, dans lequel l'accord de file d'attente de sortie permet une transmission de cellule par le commutateur, à une certaine sortie, si et seulement si la file d'attente de sortie associée à la sortie n'a pas dépassé son seuil prédéterminé,

OU

ladite cellule est marquée comme étant "active" pour ladite certaine sortie, c'est-à-dire appartenant à une trame "active", dont la cellule de début-de-trame a été transmise mais pas sa cellule de fin-de-trame,

et les files d'attente d'entrée ne sont pas autorisées à envoyer plus de cellules, qu'elles quelles soient, dès qu'elles détectent l'une de ces conditions.

2. Le procédé selon la revendication 1, dans lequel en outre,
une trame à transmettre se voit affecter un vecteur de diffusion multiple, indiquant une pluralité de sorties du commutateur.

3. Le procédé selon la revendication 1 ou 2, dans lequel en outre,
une trame devant être transmise se voit affecter une priorité, et
à une sortie du commutateur, la transmission des cellules d'une trame à priorité inférieure est interrompue, lorsqu'une trame à priorité inférieure doit être transmise à ladite même dite sortie.

4. Le procédé selon la revendication 3, dans lequel :

la transmission des cellules de la trame à priorité inférieure est reprise lorsque la trame ayant la priorité inférieure a été complètement transmise.

5. Le procédé selon la revendication 1, dans lequel chaque sortie garde la trace de la trame qui est actuellement "active", c'est-à-dire en transmission, et ne traiter aucune autre trame, qu'elle quelle soit, jusqu'à ce que la cellule de fin-de-trame de ladite trame actuelle ait été transmise.

6. Le procédé selon l'une quelconque des revendications précédentes, dans lequel chaque cellule se voit affecter un drapeau, indiquant s'il s'agit d'une cellule de début-de-trame, de continuation, ou de fin-de-trame.

**7.** Le procédé selon la revendication 1, dans lequel :

la condition "presque plein", pour ladite mémoire partagée, est un seuil programmable, inférieur à un seuil "mémoire pleine", c'est-à-dire l'espace total disponible dans ladite mémoire.

**8.** Le procédé selon la revendication 7, dans lequel :

le seuil "presque plein" $T_{AF}$, est inférieur ou égal au seuil "mémoire pleine" $T_{SM}$, moins D fois le nombre de ports N du commutateur,

$$T_{AF} \leq T_{SM} - D.N,$$

D étant le délai de commande de flux dans les cellules, dans le commutateur.

**9.** Le procédé selon l'une quelconque des revendications précédentes, dans lequel :

l'accord de file d'attente de sortie, commandant une transmission de cellules par le commutateur à une certaine sortie, est étendu pour inclure un empêchement d'erreur fatale de transmission multiple, par définition d'une trame comme devant être "active" si et uniquement si sa dernière copie est en cours de transmission, faisant que ledit accord de file d'attente de sortie permet une transmission de cellules, si et seulement si,
la file d'attente de sortie, associée à ladite certaine sortie, n'a pas dépassé son seuil prédéterminé OU
ladite cellule est marquée comme "active" pour ladite certaine sortie, c'est-à-dire comme appartenant à la dernière copie d'une trame "active", dont la cellule de début-de-trame a été transmise, mais pas sa cellule de fin-de-trame.

**10.** Le procédé selon l'une quelconque des revendications précédentes, dans lequel :

l'accord de file d'attente de sortie, commandant une transmission de cellules par le commutateur à une certaine sortie, est étendu pour inclure un empêchement d'erreur fatale de priorité de trame, par définition d'une trame comme devant être "active", si et uniquement si, sa priorité la plus haute est en cours de transmission, de sorte que ledit accord de file d'attente de sortie permet une transmission de cellules, si et seulement si,
la file d'attente de sortie associée à ladite certaine sortie n'a pas dépassé son seuil prédéterminé OU
ladite cellule est marquée comme "active" pour ladite certaine sortie, c'est-à-dire comme appartenant à la priorité la plus haute d'une "trame active", dont la cellule de début-de-trame a été transmise, mais pas sa cellule de fin de trame.

**11.** Un commutateur d'acheminement de cellules de longueur fixe, fournissant une capacité d'acheminement pour un trafic de cellules à longueur variable, avec une mémoire partagée et des files d'attente de sortie, **caractérisé en ce que** chaque adresse de ladite mémoire comprend :

un espace de stockage pour une cellule, et
un compteur de transmission multiple associé,
ainsi, lorsqu'une cellule arrive, fournissant des moyens pour stocker des données de cellule à une adresse mémoire disponible dans la mémoire partagée (84), stocker ladite adresse utilisée dans chacune, de la ou des file(s) d'attente de sortie de destination (99) à laquelle la cellule est destinée, et
compter et stocker le nombre de destinations dans ledit compteur,
et dans lequel le commutateur présente un mécanisme de commande de débit comprenant deux signaux :

un signal d'accord de mémoire partagé, basé sur l'occupation de mémoire partagée, ledit signal étant supprimé à la condition selon laquelle le remplissage de la mémoire dépasse un seuil programmable, dans lequel l'accord de mémoire partagé commande une entrée de cellule dans la mémoire partagée, en accordant l'entrée, si et seulement si,
il y a un espace disponible dans ladite mémoire partagée
ET
une condition "presque pleine" prédéterminée, indiquant qu'un espace mémoire limité est disponible, n'est pas satisfaite dans ladite mémoire partagée OU une condition "mémoire active" est satisfaite, indiquant qu'une certaine cellule de début-de-trame a été transmise, mais pas sa cellule de fin-de-trame,

un signal d'accord de file d'attente de sortie, basée sur une occupation de file d'attente de sortie, ledit signal étant supprimé à la condition selon laquelle la file d'attente de sortie dépasse un seuil programmable, dans lequel l'accord de file d'attente de sortie permet une transmission de cellules par le commutateur à une certaine sortie, si et seulement si,

la file d'attente de sortie, associée à ladite certaine sortie, n'a pas dépassé son seuil prédéterminé, OU

ladite cellule est marquée comme "active" pour ladite certaine sortie, c'est-à-dire comme appartenant à une "trame active" dont la cellule de début-de-trame a été transmise, mais pas sa cellule de fin-de-trame,

dans lequel des files d'attente d'entrée ne sont pas autorisées à envoyer plus de cellules, dès qu'elles détectent l'une de ces conditions.

**12.** Le commutateur d'acheminement selon la revendication 11, comprenant en outre :

une pluralité de registres, chacun associé à une entrée particulière et à une sortie particulière dudit commutateur, pour stocker une indication, de préférence un bit, indiquant que ladite sortie particulière est "active" par rapport à ladite entrée particulière,

ladite indication étant fixée lorsqu'une cellule de début-de-trame d'une trame spécifique, reçue sur ladite entrée particulière, est transmise sur ladite sortie particulière, et ladite trame spécifique étant la dernière copie à transmettre, et

ladite indication étant remise à l'état initial, lorsque la cellule de fin-de-trame correspondante est transmise à ladite sortie particulière.

**13.** Le commutateur d'acheminement selon la revendication 11 ou 12, comprenant en outre :

des moyens pour affecter une priorité à une trame devant être transmise, et

des moyens pour interrompre et/ou reprendre la transmission de cellules d'une trame avec une priorité inférieure, si une trame ayant une priorité supérieure doit être transmise à la même sortie.

**14.** Le commutateur d'acheminement selon la revendication 11, comprenant en outre :

une pluralité de registres, chacun associé à une priorité particulière, une entrée particulière et une sortie particulière dudit commutateur, pour stocker une indication, de préférence un bit, indiquant que ladite sortie particulière est "active" par rapport à ladite entrée particulière et à ladite priorité particulière,

ladite indication étant fixée lorsqu'une cellule de début-de-trame d'une trame spécifique de ladite priorité particulière, reçue sur ladite entrée particulière, est transmise sur ladite sortie particulière, et ladite trame spécifique étant la dernière copie à transmettre, et

ladite indication étant mise à l'état initial lorsque la cellule de fin-de-trame correspondante est transmise à ladite sortie particulière,

une pluralité de registres, chacun associé à une priorité particulière, une entrée particulière et une sortie particulière dudit commutateur pour stocker une indication, de préférence un bit, indiquant que ladite sortie particulière est "en activité de transmission" par rapport à ladite entrée particulière et à ladite priorité particulière,

ladite indication étant fixée lorsque, soit une cellule d'une trame spécifique de ladite priorité particulière, reçue sur ladite entrée particulière, a été transmise sur ladite sortie particulière dans le cycle de paquet actuel, soit qu'aucune cellule n'a été transmise du tout sur ladite sortie particulière, et

ladite indication étant autrement une remise à l'état initial.

Fig. 1

Fig. 2a

Fig. 2b

Fig. 2c

EP 1 209 865 B1

Fig. 3

Fig. 4

Fig. 5

Fig. 7

**Fig. 6**

read ptr   head ptr   write ptrs (one per input)   tail ptr

0  1    4    7    N-1

frame 1   frame 2   frame 3   frame 4   frame 5   frame 6

(n) start-of-frame (n = input)

☐ continuation

⬤ end-of-frame

Output queue (size Q < M)

Output queue (size Q = M)

Fig. 8

EP 1 209 865 B1

**Fig. 9**

EP 1 209 865 B1